# EUROPEAN PATENT SPECIFICATION

(11) **EP 3 505 800 B1**
(45) Date of publication and mention of the grant of the patent: **24.06.2020**
(21) Application number: 18248144.0
(22) Date of filing: 28.12.2018
(51) Int. Cl.: F16K 11/00, E03C 1/02, E03C 1/04

(54) **MULTI-FUNCTION VALVE**
MULTIFUNKTIONELLES VENTIL
SOUPAPE MULTIFONCTION

(30) Priority: 29.12.2017 CN 201711484035; 29.12.2017 CN 201721923629 U
(43) Date of publication of application: 03.07.2019
(73) Proprietor: Xiamen Solex High-Tech Industries Co., Ltd., Xiamen Area of China (Fujian) Pilot Free Trade Zone (CN)
(72) Inventor: DAN, Tangjun, Xiamen Area of China 361026 (CN); WEI, Zhijian, Xiamen Area of China 361026 (CN); CHEN, Wenxing, Xiamen Area of China 361026 (CN); HU, Lihong, Xiamen Area of China 361026 (CN)
(74) Representative: Høiberg P/S

(56) References cited:
- CN-A- 106 609 864
- US-A- 3 645 297
- US-A- 4 164 239
- US-A- 4 981 156

## Description

### TECHNICAL FIELD

The present disclosure relates to a multi-function valve.

### BACKGROUND

The main function of various valves for kitchen and bathroom is usually used to turn water on/off, control the flow of water, adjust the temperature of water, for example. With the development of technology, some valves that integrate two functions are present. For example, Chinese Patent Application Publication No. CN106609864A discloses a dual-coaxial temperature-controlled valve core including a valve body, a thermosensitive element having a temperature sensing end and a telescopic end, and an adjustment element. The valve body has a cold water inlet, a hot water inlet and a mixed water outlet; the temperature sensing end of the thermosensitive element is close to the mixed water outlet for sensing temperature information of outlet water at the mixed water outlet and transmitting the water to the telescopic end; the adjusting element has a first rotation adjusting portion and a second rotation adjusting portion disposed coaxially from top to bottom, the first rotation adjusting portion is disposed to be linked with a flow adjusting portion for opening or closing the mixed water outlet, and the second rotation adjusting portion is disposed to be linked with a temperature adjusting portion for controlling the temperature of outlet water.

The dual-coaxial temperature-controlled valve core disclosed in CN106609864A integrates the function for turning water on/off and the water temperature-controlled function, and has a great progress compared with the prior art. However, the multi-functional integration of the valve used in the kitchen and bathroom is still required to be further developed.

The above information disclosed in this background section is only intended to enhance understanding of the background of the present disclosure, and thus it may include information that does not constitute the prior art known to those of ordinary skill in the art.

A multi-function valve according to the preamble of claim 1 is known from US 3,645,297 A1.

### SUMMARY

A main aspect of the present disclosure is to overcome deficiencies of the prior art described above, and to provide a multi-function valve that integrates an on/off function, a switching function, and a temperature adjustment function.

In accordance with one aspect of the present disclosure, a multi-function valve includes a temperature-controlled valve core assembly, an on-off/switching valve core set, and a transmission mechanism. The temperature-controlled valve core set includes a first housing and a temperature-controlled operation assembly. The first housing is provided with a cold water inlet, a hot water inlet and a mixed water outlet. The temperature-controlled operation assembly is configured to adjust a temperature of water flow of the mixed water outlet. The temperature-controlled operation assembly includes a temperature-controlled rotation rod and a temperature adjustment rotary knob. The on-off/switching valve core set includes a second housing, a push switch operation assembly, and a rotation switching operation assembly. The second housing is provided a mixed water inlet, a first mixed water outlet, and a second mixed water outlet. The mixed water inlet is in communication with the mixed water outlet. The rotation switching operation assembly is configured to selectively open the first mixed water outlet and close the second mixed water outlet, or close the first mixed water outlet and open the second mixed water outlet. The temperature adjustment rotary knob is rotatably mounted to the rotation switching operation assembly. The push switch operation assembly is configured to selectively open the mixed water inlet or close the mixed water inlet. The transmission mechanism is disposed between the temperature adjustment rotary knob and the temperature adjustment rotation rod for transmitting torque of the temperature adjustment rotary knob to the temperature adjustment rotation rod to adjust a flow cross-sectional area of the cold water inlet and/or the hot water inlet.

It can be seen from the above technical solutions that the advantages and positive effects of the present disclosure are as follows:

The multi-function valve of the present disclosure includes a temperature-controlled valve core set, an on-off/switching valve core set and a transmission mechanism. The temperature-controlled valve core set can adjust a proportion of incoming hot and cold water, control a temperature of the water flow at the mixed water outlet, and enable the water flow with an appropriate temperature to enter the on-off/switching valve core set. The on-off/switching valve core set of the present disclosure can realize a function of turning water on/off by the press switch operation assembly on the one hand, and can realize a function of switching different waterway by the rotation switching operation assembly on the other hand. Therefore, the multi-function valve of the present disclosure may realize at least functions of controlling water temperature, turning water on/off and switching the waterway, and is very convenient to use.

### BRIEF DESCRIPTION OF THE DRAWINGS

The above and other features and advantages of the present disclosure will become more apparent from the detailed description of the exemplary embodiments with reference to the accompanying drawings.
FIG. 1 is a perspective view of the multi-function valve of the present disclosure;
FIG. 2 is an exploded perspective view of the multi-function valve shown in FIG. 1;
FIG. 3 is a partial cross-sectional view of the multi-function valve shown in FIG. 1;
FIG. 4 is a partial cross-sectional view taken along line A-A of FIG. 3;
FIG. 5 is a partial cross-sectional view taken along line B-B of FIG. 3.

In the figures: 1: temperature-controlled valve core set; 11: first upper housing; 111: connecting thread; 12: first lower housing; 13: cold water inlet; 14: hot water inlet; 15: mixed water outlet; 16: temperature adjustment rotation rod; 17: temperature adjustment rotary knob; 2: on-off/switching valve core set; 21: second housing; 22: mixed water inlet; 23: first mixed water outlet; 24: second mixed water outlet; 25: pressing cover; 26: switching rotation rod; 27: switching rotary knob; 28: press lever; 29: press switch; 3: transmission mechanism; 31: first gear; 311: connecting barrel; 32: second gear; 4: main body; 41: flow passage; 42: first channel; 43: second channel; 44: third channel; 45: fourth channel; 5: cassette; 51: through hole; 6: mounting plate; 7: panel.

### DETAILED DESCRIPTION

Example embodiments will now be described more fully with reference to the accompanying drawings. However, the example embodiments can be embodied in a variety of forms, and should not be construed as being limited to the embodiments set forth herein; rather, these embodiments are provided so that this disclosure will be thorough and complete, and the concepts of the example embodiments will be fully given to those skilled in the art. The same reference numerals in the drawings denote the same or similar structures, and thus their detailed descriptions will be omitted.

In the specification, the terms such as "a", "an", "the" and "said" are used to indicate the presence of one or more elements/components; the terms "comprise", "include", "have", "contain" and their variants are used to be open-type and are meant to include additional elements/components, etc., in addition to the listed elements/components/etc.; and the terms "first", "second", etc. are used only as marks, rather than limitation for the number of objects.

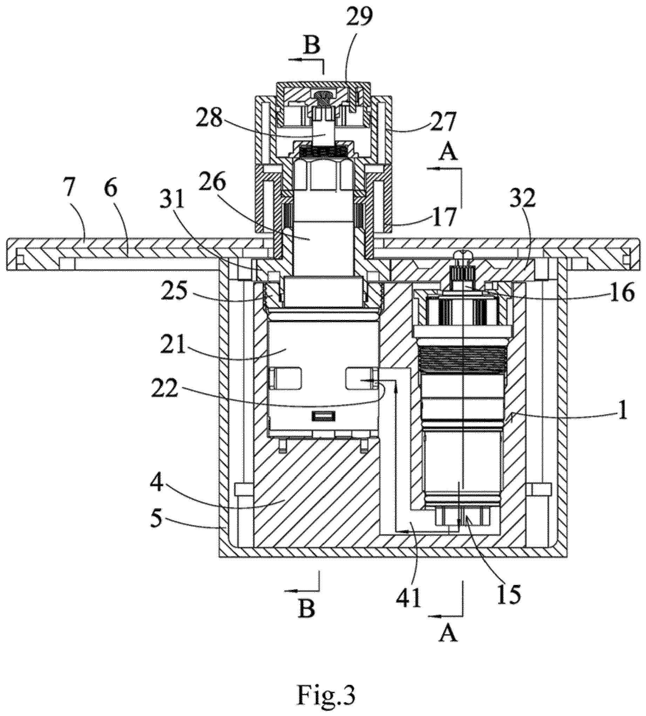

For convenience of description, orientation words "upper" and "lower" used in the present disclosure mean that an end of the multi-function valve of the present disclosure having a push switch is the upper end, and an end thereof along a center line direction of the on-off/switching valve core set, away from the press switch is the lower end. Taking FIG. 3 as an example, the top in the drawing is "upper" and the bottom is "lower". Other orientation words such as "top", "bottom" and the like also have similar meanings.

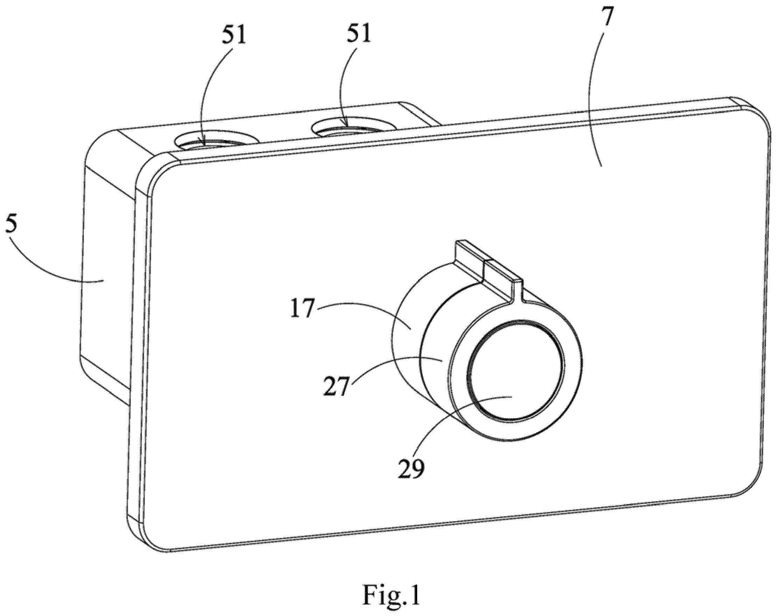

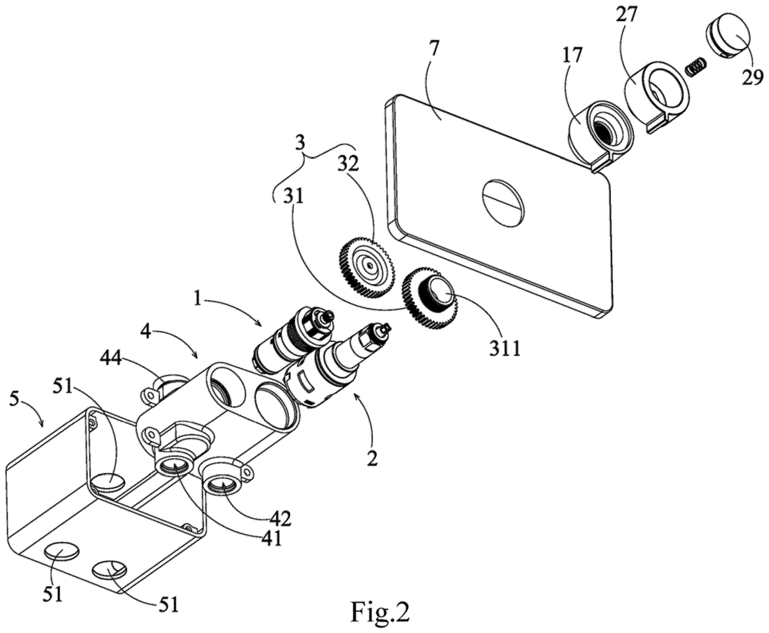

As shown in FIG. 1 and FIG. 2, an embodiment of the multi-function valve of the present disclosure mainly includes a temperature-controlled valve core set 1, a on-off/switching valve core set 2 and a transmission mechanism 3, and may further include a main body 4, a cassette 5, and a mounting plate 6 (see FIG. 3) and a panel 7.

The panel 7 covers an upper surface and a side surface of the mounting plate 6, which not only serves as an aesthetic effect, but also enhances strength of the mounting plate 6. In other embodiments, the panel 7 may also be omitted, for example, where the mounting plate 6 has sufficient strength and aesthetics. Even in some embodiments, for example, in the case where a positional relationship between the temperature-controlled valve core set 1 and the on-off/switching valve core set 2 can be reliably fixed, both the mounting plate 6 and the panel 7 can be omitted.

As shown in FIGS. 2 and 3, the main body 4 may be secured to underside of the mounting plate 6 by welding or the like. The main body 4 may be made of metal or plastic material. The main body 4 is provided with two receiving spaces. The temperature-controlled valve core set 1 and the on-off/switching valve core set 2 may be respectively disposed within the two receiving spaces.

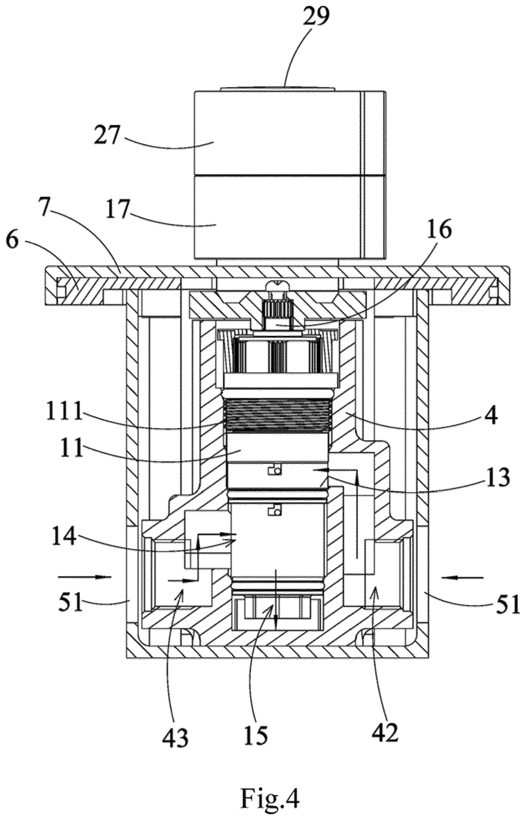

As shown in FIGS. 3 and 4, the temperature-controlled valve core set 1 includes a first housing and a temperature-controlled operation assembly. The first housing is provided with a cold water inlet 13, a hot water inlet 14 and a mixed water outlet 15. In this embodiment, as shown in FIG. 4, the first housing further includes a first upper housing 11 and a first lower housing 12 that are connected to each other, wherein the cold water inlet 13 is opened at the side of the first upper housing 11, the heat water inlet 14 is opened at the side of the first lower housing 12, and the mixed water outlet 15 is opened at the bottom end of the first lower housing 12. In other embodiments, a structure of the first housing and positions of water ports are not limited in any of manners listed above.

The temperature-controlled operation assembly is configured to adjust a temperature of the water flow at the mixed water outlet, including a temperature-adjusting rotation rod 16 and a temperature adjustment rotary knob 17, and other structures of the temperature-controlled operation assembly may apply the existing structure. The temperature adjustment rotation rod 16 projects upwardly from the first upper housing 11. The first upper housing 11 has a segment of connecting thread 111, and the temperature-controlled valve core set 1 is mounted within one of the receiving spaces of the main body 4 through the connecting thread 111. Of course, in the present disclosure, the temperature-controlled valve core set 1 is not necessarily mounted by the connecting thread 111, but may also be mounted within the main body 4 through other detachable connection structures.

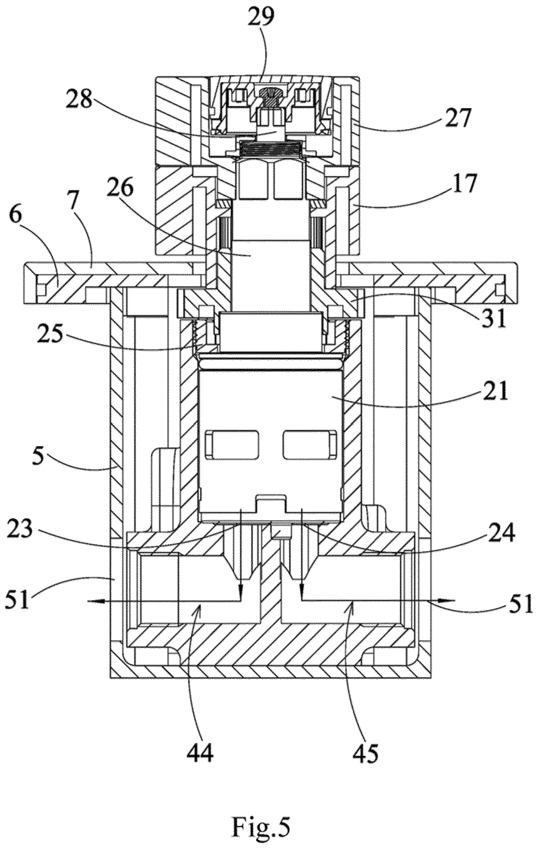

As shown in FIGS. 3 and 5, the on-off/switching valve core set 2 includes a second housing 21, a push switch operation assembly, and a rotation switching operation assembly.

The second housing 21 is provided with a mixed water inlet 22, a first mixed water outlet 23 and a second mixed water outlet 24, and the first mixed water outlet 23 is communicated with, for example, a hand-held shower, and the second mixed water outlet 24 is, for example, in communicated with a top-sprayed shower.

As shown in FIGS. 3 and 5, the rotation switching operation assembly is configured to selectively open the first mixed water outlet 23 and close the second mixed water outlet 24, or close the first mixed water outlet 23 and open the second mixed water outlet 24. That is to say, the rotation switching operation assembly is used to switch outlet water types of a hand-held shower or a top-sprayed shower.

The rotation switching operation assembly includes a switching rotation rod 26 and a switching rotary knob 27. The switching rotation rod 26 has a hollow tubular shape and protrudes upwardly from the mounting plate 6. The switching rotary knob 27 is mounted at the upper end of the switching rotation rod 26 and can drive the switching rotation rod 26 to rotate. The rotation switching operation assembly can apply an existing structure. The temperature adjustment rotary knob 17 in the temperature-controlled operation assembly is rotatably mounted, for example, to sleeve the switching rotation rod 26 and is located below the switching rotary knob 27.

As shown in FIGS. 3 and 5, the push switch operation assembly is configured to selectively open the mixed water inlet 22 or close the mixed water inlet 22, thereby opening or closing the on-off/switching valve core set 2, i.e., opening or closing the multi-function valve of the present disclosure.

The push switch operation assembly includes a push lever 28 and a push switch 29. The press lever 28 is mounted to the switching rotation rod 26 and extends to the upper end portion of the switching rotation rod, and the press switch 29 is mounted to the upper end portion of the press lever 28. The push switch operation assembly may apply existing structures. In an embodiment, the switching rotary knob 27 is provided with a receiving slot, and the press switch 29 is received within the receiving slot. As shown in FIG. 3, the temperature adjustment rotary knob 17, the switching rotary knob 27, and the push switch 29 are both located above the mounting plate 6 and the panel 7, and the main body 4 and the temperature-controlled valve core set 1 and the on-off/switching valve core set 2 mounted therein are located below the mounting plate 6 and the panel 7.

As shown in FIG. 3, the on-off/switching valve core set 2 is detachably disposed within the receiving space of the main body 4. For example, the second housing 21 has a shoulder portion on which a pressing cover 25 is pressed, and the outer periphery of the pressing cover 25 is provided with threads. The pressing cover 25 is fitted into an receiving space of the main body 4 by threads, so as to mount the second housing 21 to the main body 4. When the switching valve core set 2 needs to be repaired or replaced with a part of components, the on-off/switching valve core set 2 may be easily removed from the main body 4.

As shown in FIG. 2 to FIG. 5, the main body 4 is provided with a flow passage and a plurality of channels. For example, the main body 4 is provided with a flow passage 41 connecting the mixed water inlet 22 and the mixed water outlet 15. A first passage 42 is provided to correspond to the cold water inlet 13 of the temperature-controlled valve core set 1 in the main body 4, and a second passage 43 is provided to correspond to the hot water inlet 14. The first mixed water outlet 23 and the second mixed water outlet 24 are respectively provided with a third passage 44 and a fourth passage 45 corresponding to the on-off/switching valve core set 2 in the main body 4. The third passage 44 and the fourth passage 45 may be respectively connected to an outlet water device such as a tube of the hand-held shower or a tube of the top-sprayed shower.

In other embodiments, as shown in FIG. 2, FIG. 3 and FIG. 4, the multi-function valve further includes a cassette 5, which may have a rectangular parallelepiped shape, may is coated around the main body 4, and the upper end of the cassette 5 is connected to the mounting plate 6. The cassette 5 functions to further fix the main body 4. A through hole 51 is formed at each of positions corresponding to the flow passage 41 and the plurality of passages on the main body 4.

As shown in FIG. 2 and FIG. 3, the transmission mechanism 3 of the multi-function valve of the present disclosure is disposed between the temperature adjustment rotary knob 17 and the temperature adjustment rotation rod 16 for transmitting torque of the temperature adjustment rotary knob 17 to the temperature adjustment rotation rod 16 to adjust a flow cross-sectional area of the cold water inlet 13 or the hot water inlet 14, thereby adjusting a temperature of outlet water of the mixed water outlet 15.

In an exemplary embodiment, the transmission mechanism 3 includes a first rotating member and a second rotating member that cooperate with each other, such as a first gear 31 and a second gear 32 that are in mesh with each other. The first gear 31 is sleeved on the switching rotation rod 26, and the second gear 32 is fixedly mounted to the upper end of the temperature adjustment rod 16. The first gear 31 can be linked with the temperature adjustment rotary knob 17. For example, a connecting barrel 311 is provided to protrude upwardly at the position of the first gear 31 close to the switching rotation rod 26, and a keyway is provided at one of the outer surface of the connecting barrel 311 and the inner surface of the temperature adjustment rotary knob 17, a key is provided at the other to mate with the keyway. When the temperature adjustment rotary knob 17 is rotated, the first gear 31 may be driven to rotate, and the second gear 32 meshing with the first gear 31 is rotated accordingly. Further, the second gear 32 drives the temperature adjustment rotary knob 16 to rotate and adjusts the temperature of outlet water at the water outlet 15.

It should be noted that the transmission mechanism 3 is not limited to the specific structure described above, and any structure that can realize the linkage of the temperature adjustment rotary knob 17 and the temperature adjustment rotation rod 16 of the temperature-controlled valve core set 1 may be applied to the present disclosure.

In other embodiments, the main body 4 in the multi-function valve of the present disclosure is not limited to the structure described above. For example, the main body 4 may be a fixed frame capable of fixing the temperature-controlled valve core set 1 and the on-off/switching valve core set 2 to the mounting plate 6, and capable of fixing the relative positional relationship between the temperature-controlled valve core set 1 and the on-off/switching valve core set 2, so that this type of fixed frame may also be applied to the present disclosure. In this case, the mixed water inlet 22 and the mixed water outlet 15 may communicate with each other through a connecting tube. The cold water inlet 13 or the hot water inlet 14 may be directly connected to the cold water pipe and the hot water pipe. The first mixed water outlet 23 is communicated with, for example, a hand-held shower, and the second mixed water outlet 24 is communicated with, for example, a top-sprayed shower.

It should be understood that applications of the present disclosure are not limited to the detail structure and arrangement manner of the component presented in the specification. The present disclosure may have other embodiments, and is capable of realizing and implementing in various manners. The foregoing variations and modifications are within the scope of the present disclosure. It should be understood that the present disclosure disclosed and claimed herein extends to all alternative combinations of two or more individual features that are mentioned or apparent in the contexts and/or drawings. All of these different combinations constitute a number of alternative aspects of the present disclosure. The embodiments described in the specification illustrate the best mode for carrying out the present disclosure and will enable those skilled in the art to utilize the present disclosure. The present invention is defined by the appended claims.

## Claims

1. A multi-function valve comprising:
a temperature-controlled valve core set (1) comprising a first housing and a temperature-controlled operation assembly, the first housing being provided with a cold water inlet (13), a hot water inlet (14) and a mixed water outlet (15), the temperature-controlled operation assembly being configured to adjust a temperature of water flow of the mixed water outlet (15), and the temperature-controlled operation assembly comprising a temperature adjustment rotating rob (16) and a temperature adjustment rotary knob (17);
an on-off/switching valve core set (2) comprising a second housing (21), a push switch operation assembly and a rotation switching operation assembly, the second housing (21) being provided with a mixed water inlet (22), a first mixed water outlet (23) and a second mixed water outlet (24), and the mixed water inlet (22) being in communication with the mixed water outlet (15); the temperature adjustment rotary knob (17) being rotatably mounted to the rotation switching operation assembly; the push switch operation assembly being configured to selectively open the mixed water inlet (22) or close the mixed water inlet (22); and
a transmission mechanism (3) disposed between the temperature adjustment rotary knob (17) and the temperature adjustment rotation rod (16) for transmitting torque of the temperature adjustment rotary knob (17) to the temperature adjustment rotation rod (16) to adjust a flow cross-sectional area of the cold water inlet (13) and/or the hot water inlet (14), **characterised by**
the rotation switching operation assembly being configured to selectively open the first mixed water outlet (23) and close the second mixed water outlet (24), or close the first mixed water outlet (23) and open the second mixed water outlet (24).

2. The multi-function valve according to claim 1, wherein the rotation switching operation assembly comprises a hollow switching rotation rod (26) and a switching rotary knob (27) mounted at an upper end of the switching rotation rod (26) and capable of driving the switching rotation rod to rotate, the temperature adjustment rotary knob (17) being rotatably mounted to the switching rotation rod (26) and located below the switching rotary knob (27).

3. The multi-function valve according to claim 2, wherein the push switch operation assembly comprises a press lever (28) mounted to an upper end of the switching rotation rod (26) and a press switch (29) mounted to an upper end of the press lever (28).

4. The multi-function valve according to claim 3, wherein the switching rotary knob (27) is provided with a receiving groove, and the press switch (29) is received in the receiving groove.

5. The multi-function valve according to any of the claims 2 to 4, further comprising a mounting plate (6) and a main body (4) fixed below the mounting plate (6), the temperature-controlled valve core set (1) and the on-off/switching valve core set (2) being respectively mounted to the main body (4).

6. The multi-function valve according to claim 5, wherein the mixed water inlet (22) and the mixed water outlet (15) communicate with each other through a connecting tube.

7. The multi-function valve according to claim 5 or 6, wherein the main body (4) is provided with two receiving spaces, the temperature-controlled valve core set (1) and the on-off/switching valve core set (2) are respectively detachably disposed within the two receiving spaces, the main body (4) is provided with a plurality of passages, one of the passages communicates with the mixed water inlet (22) and the mixed water outlet (15), and rest of the passages are communicated with the cold water inlet (13), the hot water inlet (14), the first mixed water outlet (23) and the second mixed water outlet (24).

8. The multi-function valve according to claim 7, wherein the first housing has a connecting thread through which the first housing is connected to one of the receiving spaces; and the second housing (21) has a shoulder portion on which a pressing cover (25) is pressed, an outer periphery of the pressing cover (25) being provided with threads through which the outer periphery of the pressing cover is connected to the other receiving space.

9. The multi-function valve according to any of the claims 2 to 8, wherein the multi-function valve further comprises a mounting plate (6) and a main body (4) fixed below the mounting plate (6), the temperature-controlled valve core set (1) and the on-off/switching valve core set (2) being respectively mounted on the main body (4) in which the switching rotation rod (26) projects upwardly from the mounting plate (6), the temperature adjustment rotary knob (17) and the switching rotary knob (27) being both located above the mounting plate (6).

10. The multi-function valve according to any of the claims 5 to 9, wherein the mounting plate (6) is provided with a panel (7), the switching rotary knob (27) and the temperature adjustment rotary knob (17) are disposed above the panel (7); and/or an outer surface of the main body (4) is covered with a cassette (5), an upper end of which is connected to the mounting plate (6).

11. The multi-function valve according to any of claims 2 to 10, wherein the transmission mechanism (3) comprises a first rotating member and a second rotating member that cooperate with each other, the first rotating member being rotatably mounted to the switching rotation rod (26) and being capable of being linked with the temperature adjustment rotary knob (17); the second rotating member is fixedly mounted to an upper end of the temperature adjustment rotation rod (16).

12. The multi-function valve according to claim 11, wherein the first rotating member is a first gear (31) which is sleeved over the switching rotation rod (26), and the second rotating member is a second gear (32) which meshes with the first gear (31); a connecting barrel (311) is configured to protrude upwardly from a position of the first gear (31) close to the switching rotation rod (26), one of an outer surface of the connecting barrel and an inner surface of the temperature adjustment rotary knob (17) is provided with a keyway, and the other is provided with a key that cooperates with the keyway.

## Patentansprüche

1. Multifunktionelles Ventil, Folgendes umfassend:
einen Satz temperaturgesteuerter Ventileinsätze (1), umfassend ein erstes Gehäuse und eine temperaturgesteuerte Betriebsbaugruppe, wobei das erste Gehäuse mit einem Kaltwassereinlass (13), einem Heißwassereinlass (14) und einem Mischwasserauslass (15) versehen ist, wobei die temperaturgesteuerte Betriebsgruppe dazu konfiguriert ist, eine Wasserflusstemperatur des Mischwasserauslasses (15) einzustellen, und wobei die temperaturgesteuerte Betriebsbaugruppe eine Drehstange (16) zur Temperatureinstellung und einen Drehknopf (17) zur Temperatureinstellung umfasst;
einen Satz Schaltventileinsätze zum Ein- und Ausschalten (2), umfassend ein zweites Gehäuse (21), eine Tastschalterbetriebsbaugruppe und eine Drehschaltungsbetriebsbaugruppe, wobei das zweite Gehäuse (21) mit einem Mischwassereinlass (22), einem ersten Mischwasserauslass (23) und einem zweiten Mischwasserauslass (24) versehen ist, und wobei der Mischwassereinlass (22) mit dem Mischwasserauslass (15) in Kommunikation steht; wobei der Drehknopf (17) zur Temperatureinstellung drehbar an der Drehschaltungsbetriebsbaugruppe montiert ist; wobei die Tastschalterbetriebsbaugruppe dazu konfiguriert ist, selektiv den Mischwassereinlass (22) zu öffnen oder den Mischwassereinlass (22) zu schließen; und
einen Übertragungsmechanismus (3), der zwischen dem Drehknopf (17) zur Temperatureinstellung und der Drehstange (16) zur Temperatureinstellung angeordnet ist, um Drehmoment des Drehknopfs (17) zur Temperatureinstellung an die Drehstange (16) zur Temperatureinstellung zu übertragen, um einen Flussquerschnittsbereich des Kaltwassereinlasses (13) und/oder des Heißwassereinlasses (14) einzustellen, **dadurch gekennzeichnet, dass** die Drehschaltungsbetriebsbaugruppe dazu konfiguriert ist, selektiv den ersten Mischwasserauslass (23) zu öffnen und den zweiten Mischwasserauslass (24) zu schließen, oder den ersten Mischwasserauslass (23) zu schließen und den zweiten Mischwasserauslass (24) zu öffnen.

2. Multifunktionelles Ventil nach Anspruch 1, wobei die Drehschaltungsbetriebsbaugruppe eine hohle Schaltdrehstange (26) und einen Schaltdrehknopf (27) umfasst, der an einem oberen Ende der Schaltdrehstange (26) montiert und dazu in der Lage ist, die Schaltdrehstange zum Drehen anzutreiben, wobei der Drehknopf (17) zur Temperatureinstellung drehbar an der Schaltdrehstange (26) montiert und unter dem Schaltdrehknopf (27) angeordnet ist.

3. Multifunktionelles Ventil nach Anspruch 2, wobei die Tastschalterbetriebsbaugruppe einen Druckhebel (28), der an einem oberen Ende der Schaltdrehstange (26) montiert ist, und einen Druckschalter (29), der an einem oberen Ende des Druckhebels (28) montiert ist, umfasst.

4. Multifunktionelles Ventil nach Anspruch 3, wobei der Schaltdrehknopf (27) mit einer Aufnahmenut versehen ist, und wobei der Druckschalter (29) in der Aufnahmenut aufgenommen wird.

5. Multifunktionelles Ventil nach einem der Ansprüche 2 bis 4, ferner umfassend eine Montageplatte (6) und einen Hauptkörper (4), der unter der Montageplatte (6) befestigt ist, wobei der Satz temperaturgesteuerter Ventileinsätze (1) und der Satz Schaltventileinsätze zum Ein- und Ausschalten (2) jeweils an dem Hauptkörper (4) montiert sind.

6. Multifunktionelles Ventil nach Anspruch 5, wobei der Mischwassereinlass (22) und der Mischwasserauslass (15) über ein Verbindungsrohr miteinander kommunizieren.

7. Multifunktionelles Ventil nach Anspruch 5 oder 6, wobei der Hauptkörper (4) mit zwei Aufnahmeräumen versehen ist, wobei der Satz temperaturgesteuerter Ventileinsätze (1) und der Satz Schaltventileinsätze zum Ein- und Ausschalten (2) jeweils in den zwei Aufnahmeräumen lösbar angeordnet sind, wobei der Hauptkörper (4) mit einer Vielzahl von Kanälen versehen ist, wobei einer der Kanäle mit dem Mischwassereinlass (22) und dem Mischwasserauslass (15) kommuniziert und der Rest der Kanäle mit dem Kaltwassereinlass (13), dem Heißwassereinlass (14), dem ersten Mischwasserauslass (23) und dem zweiten Mischwasserauslass (24) kommuniziert.

8. Multifunktionelles Ventil nach Anspruch 7, wobei das erste Gehäuse ein Bindeglied aufweist, durch welches das erste Gehäuse mit einem der Aufnahmeräume verbunden ist; und wobei das zweite Gehäuse (21) einen Schulterabschnitt aufweist, auf den eine druckausübende Abdeckung (25) Druck ausübt, wobei ein Außenumfang der druckausübenden Abdeckung (25) mit dem anderen Aufnahmeraum verbunden ist.

9. Multifunktionelles Ventil nach einem der Ansprüche 2 bis 8, wobei das multifunktionelle Ventil ferner eine Montageplatte (6) und einen Hauptkörper (4) umfasst, der unter der Montageplatte (6) befestigt ist, wobei der Satz temperaturgesteuerter Ventileinsätze (1) und der Satz Schaltventileinsätze zum Ein-und Ausschalten (2) jeweils an dem Hauptkörper (4) montiert sind, in dem die Schaltdrehstange (26) von der Montageplatte (6) nach oben ragt, wobei sich der Drehknopf (17) zur Temperatureinstellung und der Schaltdrehknopf (27) beide über der Montageplatte (6) befinden.

10. Multifunktionelles Ventil nach einem der Ansprüche 5 bis 9, wobei die Montageplatte (6) mit einem Panel (7) versehen ist, wobei der Schaltdrehknopf (27) und der Drehknopf (17) zur Temperatureinstellung über dem Panel (7) angeordnet sind; und/oder eine Außenfläche des Hauptkörpers (4) mit einer Kassette (5) abgedeckt ist, wobei ein oberes Ende derselben mit der Montageplatte (6) verbunden ist.

11. Multifunktionelles Ventil nach einem der Ansprüche 2 bis 10, wobei ein Übertragungsmechanismus (3) ein erstes Drehelement und ein zweites Drehelement umfasst, die zusammenwirken, wobei das erste Drehelement drehbar an der Schaltdrehstange (26) montiert und dazu in der Lage ist, mit dem Drehknopf (17) zur Temperatureinstellung gekoppelt zu werden; wobei das zweite Drehelement fest an einem oberen Ende der Drehstange (16) zur Temperatureinstellung montiert ist.

12. Multifunktionelles Ventil nach Anspruch 11, wobei das erste Drehelement ein erstes Zahnrad (31) ist, das über die Schaltdrehstange (26) geschoben ist, und wobei das zweite Drehelement ein zweites Zahnrad (32) ist, das in das erste Zahnrad (31) eingreift; wobei ein verbindender Zylinder (311) dazu konfiguriert ist, aus einer Position des ersten Zahnrads (31) in der Nähe der Schaltdrehstange (26) nach oben zu ragen, wobei eine von einer Außenfläche des verbindenden Zylinders und einer Innenfläche des Drehknopfs (17) zur Temperatureinstellung mit einer Schlüsselführung versehen ist, und die andere mit einem Schlüssel versehen ist, der mit der Schlüsselführung zusammenwirkt.

## Revendications

1. Soupape multifonction comprenant :
un ensemble d'obus de soupape thermocommandé (1) comprenant un premier boîtier et un ensemble de fonctionnement thermocommandé, le premier boîtier étant pourvu d'une entrée d'eau froide (13), d'une entrée d'eau chaude (14) et d'une sortie d'eau mitigée (15), l'ensemble de fonctionnement thermocommandé étant configuré pour régler une température du débit d'eau de la sortie d'eau mitigée (15), et l'ensemble de fonctionnement thermocommandé comprenant une tige rotative de réglage de température (16) et une molette rotative de réglage de température (17) ;
un ensemble d'obus de soupape de marche-arrêt/commutation (2) comprenant un second boîtier (21), un ensemble de fonctionnement de commutateur poussoir et un ensemble de fonctionnement de commutation de rotation, le second boîtier (21) étant pourvu d'une entrée d'eau mitigée (22), d'une première sortie d'eau mitigée (23) et d'une seconde sortie d'eau mitigée (24), et l'entrée d'eau mitigée (22) étant en communication avec la sortie d'eau mitigée (15) ;
la molette rotative de réglage de température (17) étant montée de manière rotative sur l'ensemble de fonctionnement de commutation de rotation ; l'ensemble de fonctionnement de commutateur poussoir étant conçu pour ouvrir sélectivement l'entrée d'eau mitigée (22) ou fermer sélectivement l'entrée d'eau mitigée (22) ; et
un mécanisme de transmission (3) disposé entre la molette rotative de réglage de température (17) et la tige de rotation de réglage de température (16) pour transmettre le couple de la molette rotative de réglage de température (17) à la tige de rotation de réglage de température (16) afin de régler une zone de section transversale d'écoulement de l'entrée d'eau froide (13) et/ou de l'entrée d'eau chaude (14), **caractérisé par le fait que**
l'ensemble de fonctionnement de commutation de rotation est conçu pour ouvrir sélectivement la première sortie d'eau mitigée (23) et fermer sélectivement la seconde sortie d'eau mitigée (24), ou fermer sélectivement la première sortie d'eau mitigée (23) et ouvrir sélectivement la seconde sortie d'eau mitigée (24).

2. Soupape multifonction selon la revendication 1, dans laquelle l'ensemble de fonctionnement de commutation de rotation comprend une tige de rotation de commutation creuse (26) et une molette rotative de commutation (27) montée à une extrémité supérieure de la tige de rotation de commutation (26) et capable d'amener la tige de rotation de commutation à tourner, la molette rotative de réglage de température (17) étant montée de manière rotative sur la tige de rotation de commutation (26) et située en dessous de la molette rotative de commutation (27).

3. Soupape multifonction selon la revendication 2, dans laquelle l'ensemble de fonctionnement de commutateur poussoir comprend un levier à pression (28) monté sur une extrémité supérieure de la tige de rotation de commutation (26) et un commutateur à pression (29) monté sur une extrémité supérieure du levier à pression (28).

4. Soupape multifonction selon la revendication 3, dans laquelle la molette rotative de commutation (27) est pourvue d'une rainure de réception, et le commutateur à pression (29) est reçu dans la rainure de réception.

5. Soupape multifonction selon l'une quelconque des revendications 2 à 4, comprenant en outre une plaque de montage (6) et un corps principal (4) fixé en dessous de la plaque de montage (6), l'ensemble d'obus de soupape thermocommandé (1) et l'ensemble d'obus de soupape de marche-arrêt/commutation (2) étant montés respectivement sur le corps principal (4).

6. Soupape multifonction selon la revendication 5, dans laquelle l'entrée d'eau mitigée (22) et la sortie d'eau mitigée (15) communiquent mutuellement par l'intermédiaire d'un tube de raccordement.

7. Soupape multifonction selon la revendication 5 ou 6, dans laquelle le corps principal (4) est pourvu de deux espaces de réception, l'ensemble d'obus de soupape thermocommandé (1) et l'ensemble d'obus de soupape de marche-arrêt/commutation (2) sont respectivement disposés de manière amovible dans les deux espaces de réception, le corps principal (4) est pourvu d'une pluralité de passages, l'un des passages communique avec l'entrée d'eau mitigée (22) et la sortie d'eau mitigée (15), et les autres passages sont mis en communication avec l'entrée d'eau froide (13), l'entrée d'eau chaude (14), la première sortie d'eau mitigée (23) et la seconde sortie d'eau mitigée (24) .

8. Soupape multifonction selon la revendication 7, dans laquelle le premier boîtier a un filetage de raccordement à travers lequel le premier boîtier est relié à l'un des espaces de réception ; et le second boîtier (21) a une partie d'épaulement sur laquelle un couvercle de pression (25) est appuyé, une périphérie extérieure du couvercle de pression (25) étant pourvue de filetages à travers lesquels la périphérie extérieure du couvercle de pression est reliée à l'autre l'espace de réception.

9. Soupape multifonction selon l'une quelconque des revendications 2 à 8, dans laquelle la soupape multifonction comprend en outre une plaque de montage (6) et un corps principal (4) fixé sous la plaque de montage (6), l'ensemble d'obus de soupape thermocommandé (1) et l'ensemble d'obus de soupape de marche-arrêt/commutation (2) étant respectivement montés sur le corps principal (4) dans laquelle la tige de rotation de commutation (26) fait saillie vers le haut à partir de la plaque de montage (6), la molette rotative de réglage de température (17) et la molette rotative de commutation (27) étant toutes deux situées au-dessus de la plaque de montage (6).

10. Soupape multifonction selon l'une quelconque des revendications 5 à 9, dans laquelle la plaque de montage (6) est pourvue d'un panneau (7), la molette rotative de commutation (27) et la molette rotative de réglage de température (17) sont disposés au-dessus du panneau (7) ; et/ou une surface extérieure du corps principal (4) est recouverte d'une cassette (5), dont une extrémité supérieure est reliée à la plaque de montage (6).

11. Soupape multifonction selon l'une quelconque des revendications 2 à 10, dans laquelle le mécanisme de transmission (3) comprend un premier élément rotatif et un second élément rotatif qui coopèrent mutuellement, le premier élément rotatif étant monté de manière rotative sur la tige de rotation de commutation (26) et pouvant être lié à la molette rotative de réglage de température (17) ; le second élément rotatif est monté de manière fixe sur une extrémité supérieure de la tige de rotation de réglage de température (16).

12. Soupape multifonction selon la revendication 11, dans laquelle le premier élément rotatif est un premier engrenage (31) qui est emmanché sur la tige de rotation de commutation (26), et le second élément rotatif est un second engrenage (32) qui s'engrène avec le premier engrenage (31) ; un barillet de raccordement (311) est conçu pour faire saillie vers le haut à partir d'une position du premier engrenage (31) près de la tige de rotation de commutation (26), l'une d'une surface extérieure du barillet de raccordement et d'une surface intérieure de la molette rotative de réglage de température (17) est pourvue d'une rainure de clavette, et l'autre est pourvue d'une clavette qui coopère avec la rainure de clavette.
